# EUROPÄISCHE PATENTSCHRIFT

(11) **EP 1 468 867 B1**
(45) Veröffentlichungstag und Bekanntmachung des Hinweises auf die Patenterteilung: **03.05.2006**
(21) Anmeldenummer: 04005047.8
(22) Anmeldetag: 04.03.2004
(51) Int. Cl.: B60N 2/22, B60N 2/20

(54) **Fahrzeugsitz mit Tischstellung**
Vehicle seat with table position.
Siège de véhicule avec position en tablette.

(30) Priorität: 18.03.2003 DE 10311735
(43) Veröffentlichungstag der Anmeldung: 20.10.2004
(73) Patentinhaber: KEIPER GmbH & Co. KG, 67657 Kaiserslautern (DE)
(72) Erfinder: Hahn, Birger, 67292 Kirchheimboladen (DE)
(74) Vertreter: Patentanwälte Hosenthien-Held und Dr. Held

(56) Entgegenhaltungen:
- EP-A- 1 046 537
- DE-A- 3 837 665
- US-B1- 6 371 558

## Beschreibung

Die Erfindung betrifft einen Fahrzeugsitz, insbesondere einen Kraftfahrzeugsitz, mit den Merkmalen des Oberbegriffs des Anspruches 1.

Bei Fahrzeugsitzen, deren Lehne mittels Gelenkbeschlägen am Sitzunterbau angebracht und in eine flache Stellung klappbar ist, wird zum Ausgleich des Gewichts der Lehne und gegebenenfalls des Insassens eine Lehnenkompensationsfeder verwendet, die beispielsweise in der gattungsbildenden DE 38 37 665 A1 in einer Ausführung als Spiralfeder offenbart ist. Die Lehnenkompensationsfeder kann auch als Drehstabfeder ausgebildet sein. Bei Fahrzeugsitzen der eingangs genannten Art mit Tischklappfunktion, bei denen die Lehne nach vorne in eine im wesentlichen horizontale Stellung klappbar ist, muß die Lehnendrehachse relativ hoch angeordnet sein, was aus Bauraumgründen einen Einsatz der bekannten Lehnenkompensationsfedern verhindert.

Der Erfindung liegt die Aufgabe zu Grunde, einen Fahrzeugsitz der eingangs genannten Art zu verbessern, insbesondere hinsichtlich der Kompensation des Lehnengewichts. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Dadurch, daß eine sitzunterbaufest gelagerte Kompensationsfeder über ein bewegliches Hebelgetriebe in Wirkverbindung mit der Lehnenstruktur steht, kann mit dem Hebelgetriebe der Höhenunterschied zwischen der Drehachse und dem Sitzunterbau überwunden und die Kompensationswirkung der Kompensationsfeder auf die Lehne übertragen werden. Für eine definierte Bewegung des Hebelgetriebes weist dieses vorzugsweise untereinander angelenkte Bauteile, wie Hebel, Lenker und Koppeln auf. Durch Winkelformen können Richtungsumlenkungen erreicht werden.

Vorzugsweise weist die Kompensationsfeder in einer Zwischenstellung der Lehne zwischen der Gebrauchsstellung und der Tischstellung eine minimale Vorspannung auf, so daß sie sowohl beim Übergang in die Gebrauchsstellung als auch beim Übergang in die Tischstellung abfedert. Dies hält die Belastungen des Beschlags besonders gering. Die Zwischenstellung stellt ein stabiles Minimum für die Lehne dar. Das Hebelgetriebe weist vorzugsweise in einer Zwischenstellung der Lehne zwischen der Gebrauchsstellung und der Tischstellung, die bevorzugt mit der Zwischenstellung der minimalen Vorspannung der Kompensationsfeder übereinstimmt, einen Totpunkt auf. Der Totpunkt trennt die verschiedenen Übertragungsrichtungen und -winkel der Kompensationswirkung, die für den Übergang in die Gebrauchsstellung einerseits und in die Tischstellung andererseits optimiert sind. In einer bevorzugten Ausführung schneidet die Verlängerungslinie der Koppel im Totpunkt die Drehachse. d.h. die Koppel - und damit das Hebelgetriebe - übt im Totpunkt kein Drehmoment auf den Beschlag aus.

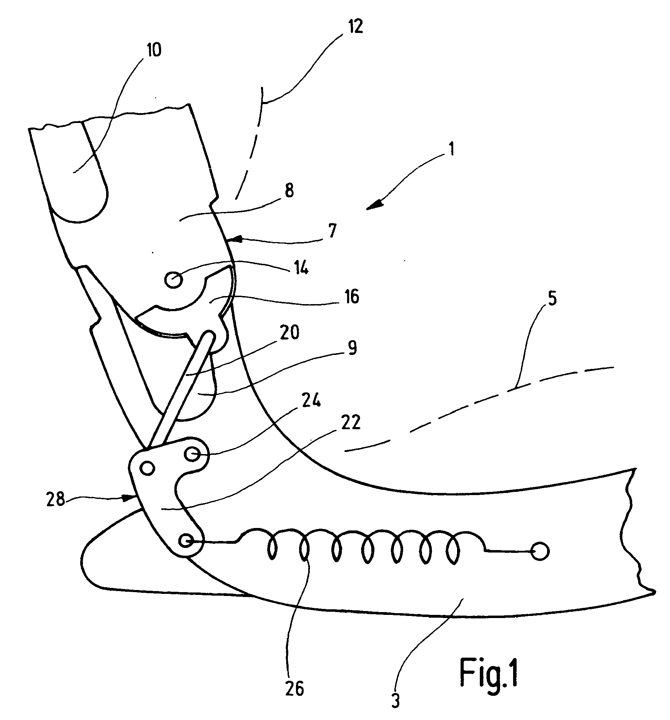

Im folgenden ist die Erfindung anhand eines in der Zeichnung dargestellten Ausführungsbeispiels näher erläutert. Es zeigen
- Fig. 1: eine Seitenansicht des Ausführungsbeispiels in der Gebrauchsstellung,

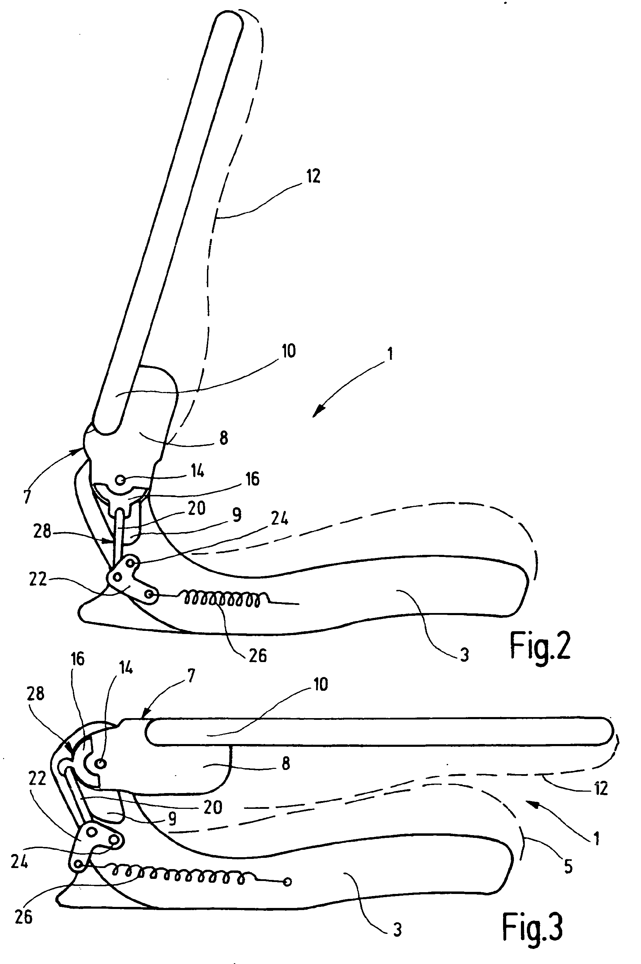

- Fig. 2: eine entsprechende Seitenansicht beim Übergang in die Tischstellung, wobei die Lehne eine Zwischenstellung einnimmt, und
- Fig. 3: eine entsprechende Seitenansicht in der Tischstellung.

Ein Fahrzeugsitz 1 ist für eine hintere, d.h. zweite oder dritte Sitzreihe in einem Kraftfahrzeug vorgesehen. Ein Sitzunterbau 3 trägt ein in der Zeichnung nur angedeutetes Sitzkissen 5. Auf jeder Fahrzeugsitzseite ist ein Beschlag 7 angeordnet, welcher als Gelenkbeschlag oder als Getriebebeschlag mit Freischwenkfunktion ausgebildet ist. Jeder Beschlag 7 weist ein erstes Beschlagteil 8 und zweites Beschlagteil 9 auf, welche relativ zueinander verdrehbar und verriegelbar sind. Die beiden Beschläge 7 sind über eine nicht näher dargestellte, zwischen den Beschlägen 7 verlaufende Übertragungsstange synchron entriegelbar. Jedes erste Beschlagteil 8 ist fest an der Lehnenstruktur 10 einer Lehne 12 angebracht, während das zweite Beschlagteil 9 fest an dem nach oben gezogenen, hinteren Endbereich des Sitzunterbaus 3 angebracht ist. Die Drehachse 14 des Beschlags 7 bildet zugleich die Drehachse der Lehne 12.

Am ersten Beschlagteil 8 ist ein Lehnenanbindungsstück 16 angebracht, welches sich konzentrisch um die Drehachse 14 krümmt. Am Lehnenanbindungsstück 16 ist eine Koppel 20 mit einem Ende angelenkt, deren anderes Ende an einem Lenker 22 angelenkt ist, welcher mittels eines Lagerbolzens 24 drehbar am Sitzunterbau 3 gelagert ist. Der Lenker 22 weist eine Winkelform auf, wobei die Koppel 20 im Scheitelbereich angelenkt ist, während der Lagerbolzen 24 am Ende eines Schenkels angeordnet ist. Am Ende des anderen Schenkels ist eine als Zugfeder ausgebildete Kompensationsfeder 26 eingehängt, welche an ihrem anderen, vorderen Ende am Sitzunterbau 3 angebracht ist. Die sitzunterbaufest gelagerte, vorgespannte Kompensationsfeder 26 ist näherungsweise horizontal und entlang des Sitzunterbaus 3 verlaufend angeordnet. Das Lehnenanbindungsstück 16, die Koppel 20 und der Lenker 22 bilden ein bewegliches Hebelgetriebe 28, über welches die Kompensationsfeder 26 in Wirkverbindung mit der Lehnenstruktur 10 steht.

Die neigungseinstellbare Lehne 12 kann mittels Entriegeln und Verschwenken der Beschläge 7 verschiedene Gebrauchsstellungen einnehmen, die zum Einsitzen geeignet sind, wobei die Lehne 12 dann unterschiedlich gegenüber der Vertikalen in Fahrtrichtung nach hinten geneigt ist, beispielsweise in der sogenannten Designstellung um etwa 23°. Die Lehne 12 kann auch nach Entriegeln des Beschlags 7 nach vorne in eine Tischstellung geklappt werden, wobei dann die Rückseite der Lehne 12 im wesentlichen horizontal angeordnet ist und nach oben zeigt.

Das Hebelgetriebe 28 ist so ausgelegt, daß es in einer Zwischenstellung der Lehne 12 zwischen den Gebrauchsstellungen und der Tischstellung einen Totpunkt einnimmt. In diesem Totpunkt ist die Koppel 20 senkrecht zum Lehnenanbindungsstück 16 angeordnet, d.h. die Verlängerungslinie der radial abstehenden Koppel 20 schneidet die Drehachse 14. Die Kompensationsfeder 26 weist dann ihre geringste Vorspannung auf. Von dieser Zwischenstellung aus wird die Kompensationsfeder 26 in beide Richtungen mehr gespannt, d.h. sie federt sowohl gegen die Gebrauchsstellungen als auch gegen die Tischstellung ab. Nähert sich daher die Lehne 12 einer dieser Stellungen, so wird in beiden Fällen eine Belastung des Beschlags 7 durch das Gewicht der Lehne 12 vermieden, was Beschädigungen des Beschlags 7 beim Verriegeln vermeidet.

### Bezugszeichenliste

- 1: Fahrzeugsitz
- 3: Sitzunterbau
- 5: Sitzkissen
- 7: Beschlag
- 8: erstes Beschlagteil
- 9: zweites Beschlagteil
- 10: Lehnenstruktur
- 12: Lehne
- 14: Drehachse
- 16: Lehnenanbindungsstück
- 20: Koppel
- 22: Lenker
- 24: Lagerbolzen
- 26: Kompensationsfeder
- 28: Hebelgetriebe

## Patentansprüche

1. Fahrzeugsitz, insbesondere Kraftfahrzeugsitz, mit einem Sitzunterbau (3), einer Lehnenstruktur (10) einer Lehne (12), welche um eine Drehachse (14) zwischen wenigstens einer Gebrauchsstellung und einer Tischstellung klappbar ist, und wenigstens einem Beschlag (7), welcher mit einem ersten Beschlagteil (8) an der Lehnenstruktur (10) und mit einem relativ zum ersten Beschlagteil (8) um die Drehachse (14) verdrehbaren zweiten Beschlagteil (9) am Sitzunterbau (3) fest angebracht ist, und eine Kompensationsfeder (26) **dadurch gekennzeichnet, daß** die sitzunterbaufest gelagerte Kompensationsfeder (26) über ein bewegliches Hebelgetriebe (28) in Wirkverbindung mit der Lehnenstruktur (10) steht.

2. Fahrzeugsitz nach Anspruch 1, **dadurch gekennzeichnet, daß** das Hebelgetriebe (28) einen schwenkbar am Sitzunterbau (3) gelagerten Lenker (22) aufweist

3. Fahrzeugsitz nach Anspruch 2, **dadurch gekennzeichnet, daß** der Lenker (22) eine Winkelform aufweist.

4. Fahrzeugsitz nach Anspruch 2 oder 3, **dadurch gekennzeichnet, daß** die Kompensationsfeder (26) am Lenker (22) angebracht ist.

5. Fahrzeugsitz nach einem der Ansprüche 1 bis 4, **dadurch gekennzeichnet, daß** das Hebelgetriebe (28) eine am ersten Beschlagteil (8) angelenkte Koppel (20) aufweist.

6. Fahrzeugsitz nach Anspruch 5, **dadurch gekennzeichnet, daß** die Koppel (20) an einem am ersten Beschlagteil (8) angebrachten Lehnenanbindungsstück (16) des Hebelgetriebes (28) angelenkt ist.

7. Fahrzeugsitz nach einem der Ansprüche 2 bis 4 und nach Anspruch 5 oder 6, **dadurch gekennzeichnet, daß** die Koppel (20) am Lenker (22) angelenkt ist.

8. Fahrzeugsitz nach einem der Ansprüche 1 bis 7, **dadurch gekennzeichnet, daß** die Kompensationsfeder (26) in einer Zwischenstellung der Lehne (12) zwischen der Gebrauchsstellung und der Tischstellung eine minimale Vorspannung aufweist.

9. Fahrzeugsitz nach einem der Ansprüche 1 bis 8, **dadurch gekennzeichnet, daß** das Hebelgetriebe (28) in einer Zwischenstellung der Lehne (12) zwischen der Gebrauchsstellung und der Tischstellung einen Totpunkt aufweist.

10. Fahrzeugsitz nach einem der Ansprüche 5 bis 7 und nach Anspruch 9, **dadurch gekennzeichnet, daß** im Totpunkt die Verlängerungslinie der Koppel (20) die Drehachse (14) schneidet.

## Claims

1. Vehicle seat, in particular automobile seat with a seat substructure (3), a backrest structure (10), a backrest (12), which is adapted for folding about an axis of rotation (14) between at least one position in use and a fold-flat position, and with at least one fitting (7), which is secured to the backrest structure (10) with a first fitting member (8) and to the seat substructure (3) with a second fitting member (9) that is rotatable relative to the first fitting member (8) about an axis of rotation (14), and a compensation spring (26), **characterized in that** the compensation spring (26) that is secured to the seat substructure is operatively connected to the backrest structure (10) via a movable linkage (28).

2. Vehicle seat of claim 1, **characterized in that** the linkage (28) comprises a link (22), which is pivotally mounted to the seat substructure (3).

3. Vehicle seat of claim 2, **characterized in that** the link (22) has an angular shape.

4. Vehicle seat of claim 2 or 3, **characterized in that** the compensation spring (26) is attached to the link (22).

5. Vehicle seat of one of claims 1-4, **characterized in that** the linkage (28) includes a connecting bar (20), which is jointed to the first fitting member (8).

6. Vehicle seat of claim 5, **characterized in that** the connecting bar (20) is jointed to a backrest attachment element (16) of the linkage (28), which is mounted to the first fitting member (8).

7. Vehicle seat of one of claims 2-4, and claim 5 or 6, **characterized in that** the connecting bar (20) is jointed to the link (22).

8. Vehicle seat of one of claims 1-7, **characterized in that** the compensation spring (26) has a minimal bias in an intermediate position of the backrest (12) between the position in use and the fold-flat position.

9. Vehicle seat of one of claims 1-8, **characterized in that** the linkage (28) has a dead center in an intermediate position of the backrest (12) between the position in use and the fold-flat position.

10. Vehicle seat of one of claims 5-7 and claim 9, **characterized in that** in the dead center the extension line of the connecting bar (20) intersects the axis of rotation (14).

## Revendications

1. Siège de véhicule, en particulier siège de véhicule automobile, présentant une infrastructure de siège (3), une structure de dossier (10) d'un dossier (12), lequel est apte à être rabattu autour d'un axe de rotation (14) entre au moins une position d'utilisation et une position de table, et au moins une ferrure (7), laquelle est montée solidement sur l'infrastructure de siège (3) avec une première partie de ferrure (8) sur la structure de dossier (10) et avec une deuxième partie de ferrure (9) apte à tourner autour de l'axe de rotation (14) par rapport à la première partie de ferrure (8), et un ressort de compensation (26), **caractérisé par le fait que** le ressort de compensation (26) monté solidaire de l'infrastructure de siège se trouve en liaison active avec la structure de dossier (10) par l'intermédiaire d'un mécanisme à levier mobile (28).

2. Siège de véhicule selon la revendication 1, **caractérisé par le fait que** le mécanisme à levier (28) présente un organe de direction (22) monté pivotable sur l'infrastructure de siège (3).

3. Siège de véhicule selon la revendication 2, **caractérisé par le fait que** l'organe de direction (22) présente une forme angulaire.

4. Siège de véhicule selon l'une des revendications 2 ou 3, **caractérisé par le fait que** le ressort de compensation (26) est monté sur l'organe de direction (22).

5. Siège de véhicule selon l'une des revendications 1 à 4, **caractérisé par le fait que** mécanisme à levier (28) présente une bielle (20) articulée à la première partie de ferrure (8).

6. Siège de véhicule selon la revendication 5, **caractérisé par le fait que** la bielle (20) est articulée à une pièce de liaison au dossier (16), montée sur la première partie de ferrure (8), de l'organe du mécanisme à levier (28).

7. Siège de véhicule selon l'une des revendications 2 à 4 et selon l'une des revendications 5 ou 6, **caractérisé par le fait que** la bielle (20) est articulée à l'élément de direction (22).

8. Siège de véhicule selon l'une des revendications 1 à 7, **caractérisé par le fait que** le ressort de compensation (26) présente dans une position intermédiaire du dossier (12) entre la position d'utilisation et la position de table une prétension minimale.

9. Siège de véhicule selon l'une des revendications 1 à 8, **caractérisé par le fait que** le mécanisme à levier (28) présente un point mort dans une position intermédiaire du dossier (12) entre la position d'utilisation et la position de table.

10. Siège de véhicule selon l'une des revendications 5 à 7 et selon la revendication 9, **caractérisé par le fait qu'**au point mort, la ligne de prolongement de la bielle (20) coupe l'axe de rotation 14.
